# EUROPEAN PATENT SPECIFICATION

(11) **EP 0 429 595 B1**
(45) Date of publication and mention of the grant of the patent: **07.08.1996**
(21) Application number: 90908506.0
(22) Date of filing: 25.05.1990
(51) Int. Cl.: C08L 51/06

(54) **BLENDS BASED ON STYRENE COPOLYMERS HAVING IMPROVED IMPACT STRENGTH AT LOW TEMPERATURES**
MISCHUNGEN VON STYRENCOPOLYMEREN MIT VERBESSERTER SCHLAGFESTIGKEIT BEI NIEDRIGEN TEMPERATUREN
MELANGES A BASE DE COPOLYMERES DE STYRENE RESISTANT MIEUX AUX CHOCS A BASSE TEMPERATURE

(30) Priority: 26.05.1989 IT 2065689
(43) Date of publication of application: 05.06.1991
(73) Proprietor: ENICHEM S.p.A., I-20124 Milano (IT)
(72) Inventor: MORO, Alessandro, I-45030 Occhiobello (IT); ANDREOLI, Gaetano, I-45030 Occhiobello (IT); BORGHI, Italo, I-44100 Ferrera (IT); FASULO, Gian, Claudio, I-46010 S.S. di Curtatone (IT)
(74) Representative: Lamb, John Baxter
(86) International application number: EP9000903
(87) International publication number: WO9014390

(56) References cited:
- EP-A- 0 107 303
- EP-A- 0 126 952
- EP-A- 0 277 835
- EP-A- 0 310 123
- Database WPIL, No. 87-226737, Derwent Publications Ltd, (London, GB), & JP-A- 62184051

## Description

The present invention relates to mixtures based on copolymers of styrene and having improved mechanical characteristics, i.e. impact strength, especially at low temperature. More particularly, the present invention relates to such mixtures which are particularly suited for conversion into shaped articles by injection moulding with low shrinkage during the moulding process.

As is known, impact-resistant styrene copolymers may be obtained by polymerization (either bulk-polymerization or bulk-suspension polymerization) of solutions of polybutadiene or styrene-butadiene rubbers or of saturated rubbers of the ethylene-propylene type (EPM) or of rubbers based on ethylene/propylene/nonconjugated diene (EPDM), in styrene alone or in admixture with other ethylenically unsaturated polymerizable monomers.

In particular, styrene copolymers containing an ethylenically unsaturated nitrile and made impact-resistant by means of an EPM or EPDM rubber (which are generally known as AES polymers) are usually obtained in the form of concentrates having a high rubber content. These concentrates are used either as such or in admixture with other polymers in order to obtain products suitable for injection moulding, extrusion and thermoforming and having the desired properties.

In fact, AES copolymers exhibit excellent impact strength, but their low thermal stability and stiffness make them unsuitable for some particular uses.

In order to obviate this shortcoming of the AES copolymers it is known to prepare mixtures with other polymers having the above properties. Thus, it known to mix styrene copolymers based on EPM or EPDM rubber and acrylonitrile with a separately prepared styrene-acrylonitrile resin (SAN), as is disclosed in U.S. Patents Nos 3,489,821; 3,849,518; 3,676, 528 and 4,202,948.

Japanese patent publication No. 51-24540 discloses a thermoplastic composition comprising 90-10% of a styrene acrylonitrile-EPM or EPDM rubber copolymer and 10-90% of a polycarbonate.

European patent application No. 88 300 956 (EP-A-277 835) discloses a mixture comprising 10-90% by weight of a styrene/ethylenically unsatured nitrile/olefinic elastomer copolymer and 90-10% by weight of a mixture of resins containing aromatic groups, consisting of 70-99% by weight of polycarbonate and 30-1% by weight of an aromatic polyester. Other similar blends are disclosed in EP-A-0310123, EP-A-0107303 and JP-A-62-184051.

Although there mixtures are satisfactory for certain uses, for which high impact strength, thermal stability, resistance to chemical agents or to decoloring are required, they exhibit some shortcomings which limit their use. Such shortcomings are mainly due to the low compatibility of the styrene copolymer with the other polymers which are utilized to make up for the properties lacking in the styrene copolymer.

In particular, mixtures of a styrene copolymer of the AES type and a polycarbonate exhibit a strong anisotropy of the resilience characteristics as well as an insufficient mechanical resistance, especially in the flow joining areas, owing to the low compatibility between the two polymers.

The poor mechanical properties of the AES/polycarbonate mixtures may be improved by the addition of an aromatic polyester, in particular polybutyleneterephthalate. The mixtures so obtained, however, exhibit a few shortcomings, such as difficult processability, poor resistance to solvents and to stress-cracking and low impact strength especially at low temperatures, namely lower than 0°C, which shortcomings limit their potential applications.

It has now been found, in accordance with the present invention, that the physico-mechanical properties and, particularly, the processability and the impact strength at low temperatures of blends based on an impact resistant styrene copolymer of the AES type, an aromatic polyester and an aromatic polycarbonate, may be considerably improved by reducing the amount of aromatic polycarbonate to a value below 7%, and preferably not higher than 5%, by weight with respect to the blend.

In accordance with one embodiment the present invention provides a polymeric blend comprising:
a) from 60% to 90% by weight of an impact-resistant styrene copolymer derived from 1 to 35% by weight of an ethylenically unsaturated nitrile, from 20 to 40% by weight of an olefinic elastomer derived from at least two different straight chain α-monolefins and at least one non-conjugated diene, and from 25 to 78% by weight of styrene.
b) from 3% to 5% by weight of an aromatic polycarbonate; and
c) from 5 to 37% by weight of an aromatic polyester.

In the impact-resistant styrene copolymer used in the compositions of the invention, the elastomeric component (which is the substrate on which the ethylenically unsaturated nitrile and the styrene monomer are in part grafted and in part are made to mechanically adhere in the form of an ethylenically unsaturated nitrile/styrene copolymer) is suitably a rubber-like copolymer, having a Mooney viscosity ranging from 10 to 150 ML-4 at 100°C, of at least two different straight chain alpha-monoolefins (such as ethylene, propylene, butene-1 and octene-1) with at least one other non-conjugated diene. Preferably one of the alpha-monoolefins is ethylene which is copolymerized with another alpha-monoolefin having a longer chain. The weight ratio of ethylene to other alpha-monoolefin is usually from 20/80 to 80/20. Particularly preferred copolymers are the ethylene/propylene/non-conjugated diene terpolymers wherein the non-conjugated diene may be cyclic or acylic, for example 5-methylene-2-norbornene; 5-ethylidene-2-norbornene, 5-isopropylene-2-norbornene, pentadiene-1, 4; hexadiene-1, 4; hepxadiene-1,5, heptadiene-1, 5, dodecatriene-1,7,9, methyl-heptadiene-1,5, dicyclopentadiene, tetrahydroindene and 5-methyl-tetrahydroindene. The diene content ranges approximately from 5 to 20% by weight and preferably from 8 to 18% by weight of dienic monomeric units in the rubber-like terpolymer.

Particularly interesting results are obtained by using a rubber-like terpolymer having a Mooney viscosity (ML-4), measured at 100°C, ranging from 30 to 90 and a iodine number higher than 5, preferably from 10 to 40.

By ethylenically unsaturated nitrile is meant, in the first place and preferably, acrylonitrile although other acylic monomers such as methacrylonitrile, acrylic acid, methacrylic acid and alkyl-esters of the acrylic or methacrylic acid can be used.

Examples of copolymerization methods for obtaining the impact-resistant styrene copolymers used in the compositions of the invention are described in Italian Patent No. 792, 269 and in U. S. patents Nos. 3,819,765, 3, 489, 822, 3, 642, 950 and 3,849,518.

It is understood that in the graft copolymerization not all the monomer forming the resin is grafted on the rubber-like core; a part of the monomer forms a free resin, which is present in physical admixture with the graft copolymer. The amount of grafted monomer in the copolymer can be determined by extracting the product with a solvent for the non-grafted resin.

The aromatic polycarbonates used in the compositions of the present invention can be homopolymers and copolymers based, for example, on one or more of the following bisphenols, namely: di-hydroxydiphenyls, bis-(hydroxyphenyl)-alkanes, bis-(hydroxyphenyl)-cycloalkanes, bix-(hydroxyphenyl)-sulphides, bis-(hydroxyphenil)-ethers, bis-(hydroxyphenil)-ketones, bis-(hydroxyphenyl)-sulphoxides, bis-(hydroxyphenyl)-sulphones, and alpha-alpha-bis-(hydroxyphenyl-di-isopropyl benzenes; and also their nuclear-alkylated or nuclear halogenated derivatives. These and other aromatic dihydroxy compounds are well known and described in literature.

Preferred bisphenols are those of the formula: 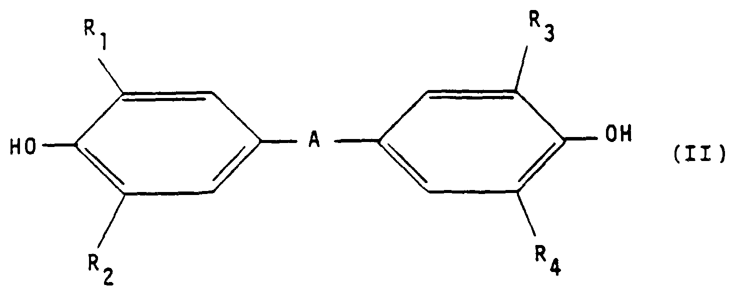 in which each of R₁, R₂, R₃ and R₄ represents a hydrogen or halogen atom or an alkyl radical containing from 1 to 4 carbon atoms; and A represents a group -0-, -CO- or -SO₂-, an alkylene radical containing 2 to 10 carbon atoms, an alkylidene radical containing from 2 to 10 carbon atoms, a cycloalkylene radical containing from 5 to 15 carbon atoms, a cycloalkylidene radical containing from 5 to 15 carbon atoms or the radical:

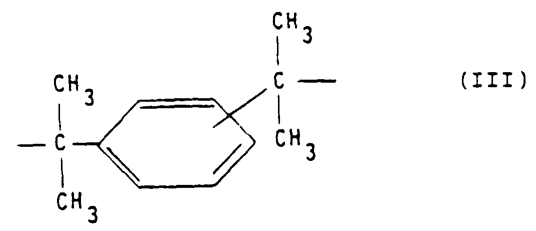

Particularly preferred bisphenols are, for example, 2,2-bis-(4-hydroxyphenyl)-propane, 2,2-bis (3,5-dimethyl-4-hydroxyphenyl)propane, 2,2-bis -(3,5-dichloro-4-hydroxyphenyl)-propane, 2,2-bis-3,5-dibromo-4-hydroxyphenyl)-propane, and 1,1-bis-(4-hydroxyphenyl)-cyclohexane.

Particularly preferred polycarbonates are those based on one or more of the above bisphenols. In particular, the polycarbonates based on 2,2-bis-(4-hydroxyphenyl)-propane or on 2,2-bis-(3,5-dimethyl-4-hydrophenyl)-propane alone or in admixture with one another or with one of the above-identified bisphenols are preferred.

Polycarbonates containing in the chain units deriving from terephthalic and/or isophthalic acid may also be used.

The aromatic polycarbonates can be prepared according to known methods, for example by the process based on transesterification in the molten state, from bisphenols and diphenyl-carbonate, and by the two-phase interface process from bisphenol and phosgene (as described in H. Schnell "Chemistry and Physics of Polycarbonates", Interscience Publisher, New York, 1964).

The aromatic polycarbonates can also be of the branched type due to incorporation of small amounts, preferably from 0.05 to 2 mole per cent, of compounds having three or more functional groups, in particular having three or more phenolic hydroxy groups.

The aromatic polycarbonates suitably have an average molecular weight of at least 10,000, more particularly from 10,000 to 200,000 and preferably from 20,000 to 80,000, as determined by measuring the relative viscosity in CH₂Cl₂ at 25°C and at a concentration of 0.5% by weight.

The aromatic polycarbonates containing repeating units (II) are well known in the art and are sold by several manfacturers, for example: General Electric Company, Pittfield, Mass., USA, under the trademark "LEXAN": and "ANIC, S. Donato Milanese (Milan), under the trademark "UDROLON".

The aromatic polyesters used in the compositions of the present invention are obtained by polycondensation of a glycol of the formula:

HO-(CH₂)ₙ-OH (IV)

(in which n is an integer from 2 to 10), with a dicarboxylic acid of the formula:

HOOC-R₅-B- R₆ COOH (V)

in which R₅ and R₆ each represent a group -(CH₂)ₘ- (where m is zero or an integer from 1 to 4); and B is a divalent aromatic radical of the formula: 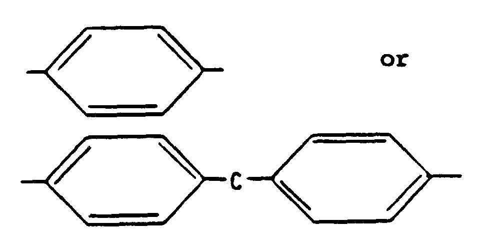 wherein C may be group:
-(-CH₂)ₚ; -(CH₂)ₚ -CO-(CH₂)ₚ-;
-(CH₂)ₚ-O-(CH₂)ₚ-; -O-(CH₂)_{q}-O-; 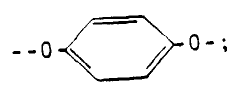 -(CH₂)ₚ-S-(CH₂)ₚ-; 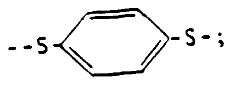 -S-(CH₂)_{q}-S-; SO₂;
(wherein p may be zero or an integer from 1 to 5; and q is an integer from 1 to 5).

The aromatic polyesters may be obtained by conventional polycondensation or polytransesterification techniques.

The polyesters are well known in the art and are commercially available from different producers, for example with the trade mark "PIBITER" produced and sold by the Applicant.

The blends of the invention may be prepared by blending at temperatures between 230 and 280°C in any known type of mixer. For instance, single-screw or double screw extruders, Banbury mixers or mixing rollers may be used.

Fillers, glass fibres, pigments and other additives such as stabilizers, anti-flame agents, lubricants, anti-static agents and pigments, may be added during the mixing step.

In particular, it has been found that the addition of glass fibres in an amount of from 1 to 40%, with respect to the blend, surprisingly involves a decrease of the impact strength of the blend, at room temperature, lower than that usually occurring in other styrene based polymers, at the same fibre concentration.

The blends of the present invention show a set of properties that are on the whole significantly better than those of the single components. For this reason these blends find use in applications requiring high tenacity, high heat-dimensional stability, good hydrolysis-resistance and easy workability, combined with a high resistance to external agents, high chemical resistance to the action of gasoline and high impact strength especially at temperatures below 0°C. These blends thus find an application in the automobile industry, in electronics, and, generally, in technical products of various kinds.

In order that the invention may be well understood the following Examples are given by way of illustration only.

In the examples all parts are by weight, unless indicated otherwise.

### Examples 1 - 4 (Examples 3 and 4 are Comparative Examples)

By means of a two-screw extruder MARIS TM 33, under degassing and a temperature of 230-260°C, blends were extruded, which consisted of:
a) an impact-resistant styrene copolymer consisting of 57% by weight of styrene, 18% by weight of acrylonitrile and 25% of EPDM rubber having a Mooney viscosity of 62-72 ML-4 at 100°C and an iodine number equal to 18;
b) a polycarbonate produced by "PROQUIGEL" under the trademark "Durolon" having an average molecular weight of 22,000.
c) a polybutylene-terephthalate produced by the Applicant under the trademark "PIBITER N 400" having an average molecular weight of 60,000 - 809,000. The weight ratios of components of the blend are indicated in Table 1.

By cutting the strands leaving the extruder, granules were obtained, which were dried for 2-4 hours at 90°C - 100°C.

In order to evaluate the physico-mechanical characteristics, the granules were injected moulded at a temperature of 240 - 260°C in a press (NEGRI & BOSSI NB 60) to obtain test pieces having the dimensions required by the standards.

### Mechanical Properties

The tensile strength, according to standard ASTM D 638, the bending modulus, according to standard ASTM D 790, and the IZOD impact strength with notch at 23°C, 0°C, -10°C and -20°C, according to standard ASTM D 256, on test pieces having a thickness of 3.2 mm and a width of 12. 7 mm, were determined.

### Thermal properties

The VICAT B softening temperature (5 kg in oil), according to standard ASTM D 1525, and HDT (at 0. 455 MPa), according to standard ASTM D 648, were determined.

### Rheological properties

The Melt-index was determined according to standard ASTM D 1238, at 250°C and 2.160 kg.

The measured properties are reported in the following Table I.

**TABLE I**

| COMPOSITION | | EXAMPLES | | | |
|---|---|---|---|---|---|
| | | 1 | 2 | 3* | 4* |
| a) Styrene copolymer | | 70,5 | 82,1 | 56,5 | 79 |
| b) Polycarbonate "DUROLON" | | 4,5 | 5,0 | 6,5 | 10 |
| c) PIBITER | | 25,0 | 12,9 | 37 | 11 |

| MECHANICAL PROPERTIES | Units | | | | |
|---|---|---|---|---|---|
| Tensile strength | | | | | |
| - Tensile yield strength | MPa | 42,1 | 40,8 | 46,1 | 40,8 |
| - Ult. tensile strength | MPa | 33,8 | 32,8 | 33,3 | 33,5 |
| - Break elongation | % | 18 | 14 | 16 | 15 |
| - Bending modulus | MPa | 1970 | 1850 | 2010 | 1890 |
| 170 D resilience w.n. | | | | | |
| at + 23°C | J/m | 750 | 780 | 710 | 780 |
| 0°C | J/m | 780 | 510 | 530 | 560 |
| - 10°C | J/m | 690 | 430 | 150 | 300 |
| -20°C | J/m | 270 | 120 | 120 | 120 |

| THERMAL PROPERTIES | | | | | |
|---|---|---|---|---|---|
| - VICAT B | °C | 90 | 90 | 90 | 90 |
| - H D T | °C | 89 | 89 | 90 | 89 |

| RHEOLOGICAL PROPERTIES | | | | | |
|---|---|---|---|---|---|
| - Melt Index | g/10' | 3,53 | 3,25 | 3,55 | 3,5 |
| - Molding Shrinkage | % | 0,57 | 0,57 | 0,79 | 0,62 |

| | | | | | |
|---|---|---|---|---|---|
| * comparison | | | | | |

### Example 5

3 Kg. of OCF 429 glass fibres were blended with 7 kg of the blended with 7 kg of the blend of Example 2, in granular form, into a drum-runner at low rotation (20 - 30 rev./min).

The thus obtained blend was extruded at 260°C in a single-screw BANDERA extruder having a cross section of 45 mm, under degassing.

The granulated product, dried for 3 hours in a ventilated oven at 120°C, was injected moulded in a NEGRI & BOSSI NB 60 press at a temperature of the molten composition of 260°C and of the moulds of 60°C, to give test pieces having the dimensions required by the standards.

The measured characteristics are listed in the following Table II.

**TABLE II**

| CHARACTERISTICS | STANDARD | UNITS | EXAMPLES |
|---|---|---|---|
| | | | 5 |
| Density | ASTM | g/cm³ | 1,320 |
| | D 1505 | | |

| TENSILE STRENGTH | | | |
|---|---|---|---|
| - Ult. tensile strength | ASTM | MPa | 92,4 |
| | D 638 | | |
| - Break elongalion | ASTM | % | 5,0 |
| | D 638 | | |

| BENDING STRENGTH | | | |
|---|---|---|---|
| - Tensile yield strength | ASTM | MPa | 161 |
| | D 790 | | |
| - Bending modulus | ASTM | MPa | 7680 |
| | D 790 | | |
| 170 D w.n. at 23°C | ASTM | J/m | 126 |
| | D 256 | | |

| THERMAL PROPERTIES | | | |
|---|---|---|---|
| - VICAT B | ASTM | °C | 105 |
| | D 1525 | | |
| - H D T | ASTM | °C | 103 |
| | D 648 | | |

## Claims

1. A blend based on a styrene copolymer and having improved impact strength at low temperatures, the blend comprising an impact-resistant styrene copolymer, an aromatic polyester and an aromatic polycarbonate, characterized in that the blend comprises:-
(a) from 60 to 90% by weight of an impact-resistant styrene copolymer constituted by from 2 to 35% by weight of an ethylenically unsaturated nitrile, from 20 to 40% by weight of an olefinic elastomer derived from at least two different straight chain α-monoolefins and at least one non-conjugated diene and from 25 to 78% by weight of styrene;
(b) from 3 to 5% by weight of an aromatic polycarbonate, and
(c) from 3 to 37% by weight of an aromatic polyester.

2. A blend according to claim 1, in which the olefinic elastomer is a rubber-like copolymer, having a Mooney viscosity ranging from 10 to 150 ML-4 at 100°C.

3. A blend according to claim 1, in which the olefinic elastomer is an ethylene/propylene/non-conjugated diene copolymer, containing 5 to 20% by weight of diene, having a Mooney viscosity ranging from 30 to 90 ML-4 at 100°C, and having an iodine number higher than 5.

4. A blend according to claim 3 in which the olefinic elastomer has an iodine number of from 10 to 40.

5. A blend according to any of the preceding claims, characterized in that the copolymerized ethylenically unsaturated nitrile is acrylonitrile.

6. A blend according to any of the preceding claims, in which the aromatic polycarbonate is obtained from a bisphenol of the formula: 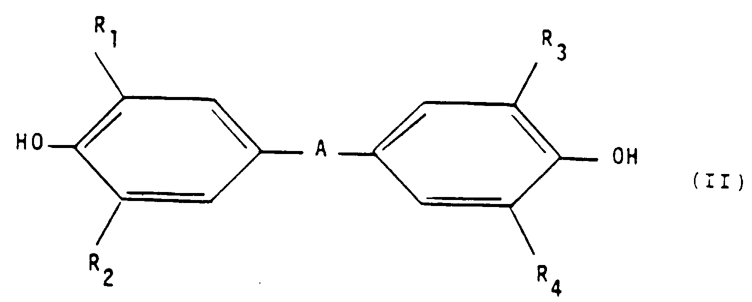 in which each of R₁, R₂, R₃ and R₄ represents a hydrogen or halogen atom or an alkyl radical containing from 1 to 4 carbon atoms; and A represents a group -O-, -CO or -SO₂-, an alkylene radical containing 2 to 10 carbon atoms, an alkylidene radical containing from 2 to 10 carbon atoms, a cycloalkylene radical containing from 5 to 15 carbon atoms, a cycloalkylidene radical containing from 5 to 15 carbon atoms or the radical:

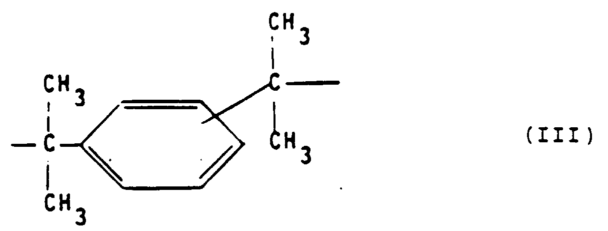

7. A blend according to claim 6, wherein the aromatic polycarbonate has an average molecular weight of at least 10,000, in particular 10,000 to 200,000, preferably from 20,000 to 80,000, as determined by measuring the relative viscosity in CH₂Cl₂ at 25°C and at a concentration of 0.5% by weight.

8. A blend according to any of the preceding claims, wherein the aromatic polyester is obtained by polycondensation of a glycol of the formula:
HO-(CH₂)ₙ-OH (IV)
(in which n is an integer from 2 to 10), with a dicarboxylic acid of the formula:
HOOC-R₅-B-R₆-COOH (V)
in which R₅ and R₆ each represent a group -(CH₂)ₘ- (where m is zero or an integer from 1 to 4); and B is a divalent aromatic radical represented of the formula: 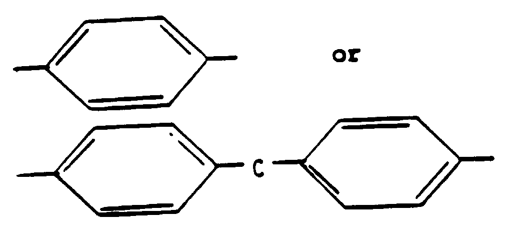 wherein C is a group selected from:
-(CH₂)ₚ; -(CH₂)ₚ -CO-(CH₂)ₚ-;
-(CH₂)ₚ-O-(CH₂)ₚ-; -O-(CH₂)_{q}-O-; 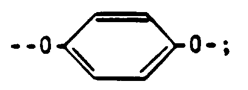 -(CH₂)ₚ-S-(CH₂)ₚ-; 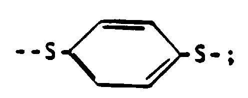 -S-(CH₂)_{q}-S-; SO₂; (wherein p is zero or an integer from 1 to 5; and q is an integer from 1 to 5).

9. A blend according to claim 8, wherein the aromatic polyester has a molecular weight of from 10,000 to 80,000.

10. A blend according to any one of the preceding claims containing, additionally, glass fibres in an amount from 1 to 40% by weight, with respect to the blend.

## Patentansprüche

1. Mischung, basierend auf einem Styrol-Copolymer und eine verbesserte Schlagzähigkeit bei niedrigen Temperaturen aufweisend, umfassend ein schlagzähes Styrol-Copolymer, einen aromatischen Polyester und ein aromatisches Polycarbonat, dadurch gekennzeichnet, daß die Mischung umfaßt:
(a) 60 bis 90 Gewichts-% eines schlagzähen Styrol-Copolymers, aufgebaut von 2 bis 35 Gewichts-% eines ethylenisch ungesättigten Nitrils, 20 bis 40 Gewichts-% eines olefinischen Elastomers, das von mindestens zwei unterschiedlichen geradkettigen α-Monoolefinen und mindestens einem nicht-konjugierten Dien abgeleitet ist, und 25 bis 78 Gewichts-% Styrol;
(b) 3 bis 5 Gewichts-% eines aromatischen Polycarbonats; und
(c) 3 bis 37 Gewichts-% eines aromatischen Polyesters.

2. Mischung nach Anspruch 1, in der das olefinische Elastomer ein Kautschuk-ähnliches Copolymer mit einer Mooney-Viskosität im Bereich von 10 bis 150 ML-4 bei 100°C ist.

3. Mischung nach Anspruch 1, in der das olefinische Elastomer ein Ethylen/Propylen/nicht-konjugiertes Dien-Copolymer ist, das 5 bis 20 Gewichts-% Dien enthält, eine Mooney-Viskosität im Bereich von 30 bis 90 ML-4 bei 100°C aufweist und eine Iodzahl von höher als 5 aufweist.

4. Mischung nach Anspruch 3, in der das olefinische Elastomer eine Iodzahl von 10 bis 40 aufweist.

5. Mischung nach irgendeinem der vorangehenden Ansprüche, dadurch gekennzeichnet, daß das copolymerisierte ethylenisch ungesättigte Nitril Acrylnitril ist.

6. Mischung nach irgendeinem der vorangehenden Ansprüche, in der das aromatische Polycarbonat erhalten wird aus einem Bisphenol der Formel: 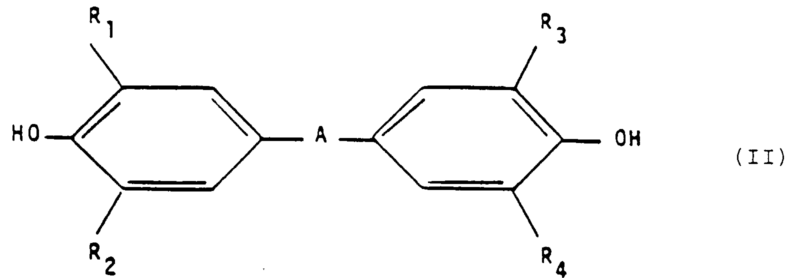 in welcher R_{**1**}, R_{**2**}, R_{**3**} und R_{**4**} jeweils ein Wasserstoff- oder Halogenatom oder einen Alkylrest, der 1 bis 4 Kohlenstoffatome enthält, darstellen; und A für eine Gruppe -O-, -CO- oder -SO_{**2**}-, einen Alkylen-Rest, der 2 bis 10 Kohlenstoffatome enthält, einen Alkyliden-Rest, der 2 bis 10 Kohlenstoffatome enthält, einen Cycloalkylen-Rest, der 5 bis 15 Kohlenstoffatome enthält, einen Cycloalkyliden-Rest, der 5 bis 15 Kohlenstoffatome enthält, oder den Rest: 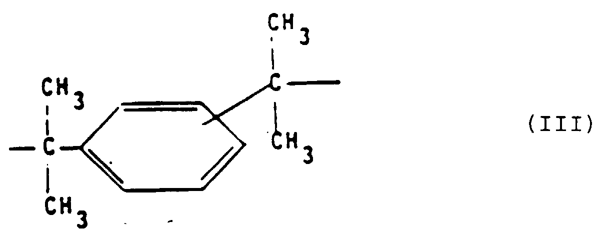 steht.

7. Mischung nach Anspruch 6, in welcher das aromatische Polycarbonat ein durchschnittliches Molekulargewicht von mindestens 10000, insbesondere 10000 bis 200000, vorzugsweise 20000 bis 80000, wie bestimmt durch Messen des Viskositätsverhältnisses in CH_{**2**}Cl_{**2**} bei 25°C und bei einer Konzentration von 0,5 Gewichts-%, aufweist.

8. Mischung nach irgendeinem der vorangehenden Ansprüche, in welcher der aromatische Polyester erhalten wird durch Polykondensation eines Glycols der Formel:
HO-(CH_{**2**})_{**n**}-OH (IV)
(worin n eine ganze Zahl von 2 bis 10 ist) mit einer Dicarbonsäure der Formel:
HOOC-R_{**5**}-B-R_{**6**}-COOH (V)
in welcher R_{**5**} und R_{**6**} jeweils eine Gruppe -(CH_{**2**})_{**m**}- darstellen (wobei m 0 oder eine ganze Zahl von 1 bis 4 ist); und B ein zweiwertiger aromatischer Rest ist, der dargestellt wird durch die Formel: 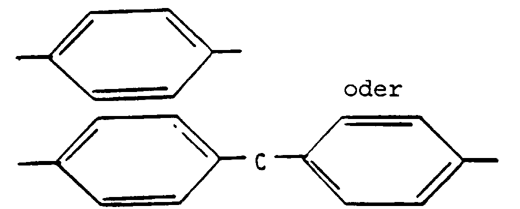 worin C eine Gruppe ist, die ausgewählt ist aus:
-(CH₂)ₚ; -(CH₂)ₚ -CO-(CH₂)ₚ-;
-(CH₂)ₚ-O-(CH₂)ₚ-; -O-(CH₂)_{q}-O-; 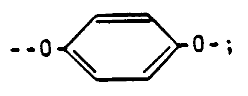 -(CH₂)ₚ-S-(CH₂)ₚ-; 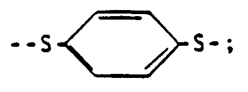 -S-(CH₂)_{q}-S-; SO₂; (worin p 0 oder eine ganze Zahl von 1 bis 5 ist; und q eine ganze Zahl von 1 bis 5 ist).

9. Mischung nach Anspruch 8, in welcher der aromatische Polyester ein Molekulargewicht von 10000 bis 80000 aufweist.

10. Mischung nach irgendeinem der vorangehenden Ansprüche, zusätzlich enthaltend Glasfasern in einer Menge von 1 bis 40 Gewichts-% bezogen auf die Mischung.

## Revendications

1. Mélange à base d'un copolymère de styrène, présentant une résistance au choc améliorée à basse température, ledit mélange comprenant un copolymère de styrène résistant au choc, un polyester aromatique et un polycarbonate aromatique, caractérisé en ce que le mélange comprend :
(a) de 60 à 90% en poids d'un copolymère de styrène résistant au choc, constitué de 2 à 35% en poids d'un nitrile éthyléniquement insaturé, 20 à 40% en poids d'un élastomère oléfinique provenant d'au moins deux α-monooléfines différentes à chaîne droite et d'au moins un diène non conjugué, et 25 à 78% en poids de styrène,
(b) de 3 à 5% en poids d'un polycarbonate aromatique, et
(c) de 3 à 37% en poids d'un polyester aromatique.

2. Mélange selon la revendication 1, dans lequel l'élastomère oléfinique est un copolymère de type caoutchouc, présentant une viscosité Mooney comprise dans l'intervalle allant de 10 à 150 ML-4 à 100°C.

3. Mélange selon la revendication 1, dans lequel l'élastomère oléfinique est un copolymère éthylène/propylène/diène non conjugué, contenant 5 à 20% en poids de diène et présentant une viscosité Mooney comprise dans l'intervalle allant de 30 à 90 ML-4 à 100°C, et un indice d'iode supérieur à 5.

4. Mélange selon la revendication 3, pour lequel l'élastomère oléfinique présente un indice d'iode de 10 à 40.

5. Mélange selon l'une quelconque des revendications précédentes, caractérisé en ce que le nitrile éthyléniquement insaturé, copolymérisé, est l'acrylonitrile.

6. Mélange selon l'une quelconque des revendications précédentes, pour lequel le polycarbonate aromatique est obtenu à partir d'un bisphénol de formule : 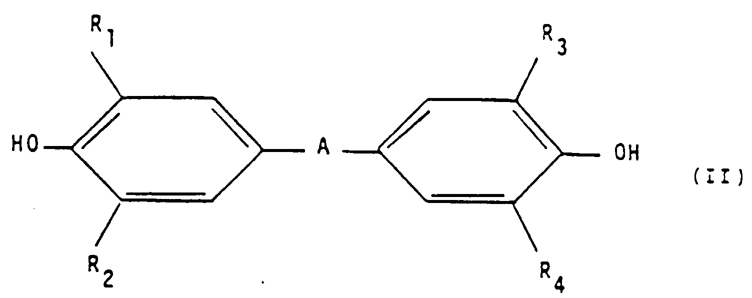 dans laquelle R₁, R₂, R₃ et R₄ représentent chacun un atome d'hydrogène ou d'halogène ou un groupe alkyle contenant 1 à 4 atomes de carbone, et A représente un groupe -O-, -CO- ou -SO₂-, un groupe alkylène contenant 2 à 10 atomes de carbone, un groupe alkylidène contenant 2 à 10 atomes de carbone, un groupe cycloalkylène contenant 5 à 15 atomes de carbone, un groupe cycloalkylidène contenant 5 à 15 atomes de carbone ou le groupe :

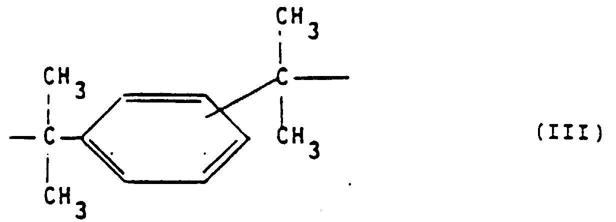

7. Mélange selon la revendication 6, pour lequel le polycarbonate aromatique présente une masse moléculaire moyenne d'au moins 10 000, en particulier de 10 000 à 200 000 et de préférence de 20 000 à 80 000, cette masse moléculaire moyenne étant déterminée par mesure de la viscosité relative dans CH₂Cl₂ à 25°C et à une concentration de 0,5% en poids.

8. Mélange selon l'une quelconque des revendications précédentes, pour lequel le polyester aromatique est obtenu par polycondensation d'un glycol de formule :
HO-(CH₂)ₙ-OH (IV)
dans laquelle n représente un nombre entier de 2 à 10, avec un acide dicarboxylique de formule:
HOOC-R₅-B-R₆-COOH (V)
dans laquelle R₅ et R₆ représentent chacun un groupe -(CH₂)ₘ- où m représente zéro ou un nombre entier de 1 à 4, et B représente un groupe aromatique divalent, représenté par la formule : 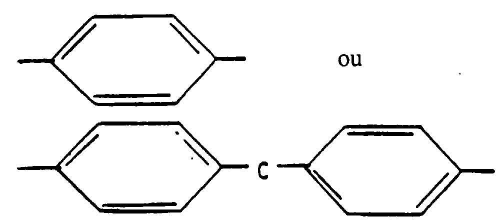 dans laquelle C représente un groupe choisi parmi :
-(CH₂)ₚ; -(CH₂)ₚ -CO-(CH₂)ₚ-;
-(CH₂)ₚ-O-(CH₂)ₚ-; -O-(CH₂)_{q}-O-; 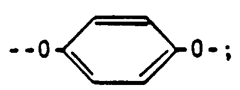 -(CH₂)ₚ-S-(CH₂)ₚ-; 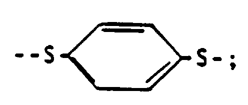 -S-(CH₂)_{q}-S-; SO₂; formules dans lesquelles p représente zéro ou un nombre entier de 1 à 5 et q représente un nombre entier de 1 à 5.

9. Mélange selon la revendication 8, pour lequel le polyester aromatique présente une masse moléculaire de 10 000 à 80 000.

10. Mélange selon l'une quelconque des revendications précédentes, qui contient en plus des fibres de verre en une proportion de 1 à 40% en poids par rapport au mélange.
